# EUROPÄISCHE PATENTSCHRIFT

(11) **EP 0 342 588 B1**
(45) Veröffentlichungstag und Bekanntmachung des Hinweises auf die Patenterteilung: **10.08.1994**
(21) Anmeldenummer: 89108753.8
(22) Anmeldetag: 16.05.1989
(51) Int. Cl.: B01D 53/34

(54) **Abgasreinigungsverfahren und -vorrichtung mit Wabenkörpern aus Calciumverbindungen**
Method and apparatus for purifying exhaust gases with honey comb bodies made of calcium compounds
Méthode et dispositif pour purifier des gaz d'échappement avec des corps en forme de nid d'abeilles faits de composés de calcium

(30) Priorität: 17.05.1988 DE 3816768
(43) Veröffentlichungstag der Anmeldung: 23.11.1989
(73) Patentinhaber: Steuler-Industriewerke GmbH, D-56203 Höhr-Grenzhausen (DE)
(72) Erfinder: Becher, Klaus, D-5410 Höhr-Grenzhausen (DE); Sturm, Werner, D-5431 Bilkheim (DE); Zakrzewski, Eberhard, D-5410 Höhr-Grenzhausen (DE); Flessner, Gerd, D-5450 Neuwied-Niederbieber (DE)
(74) Vertreter: VOSSIUS & PARTNER

(56) Entgegenhaltungen:
- WO-A-82/04406
- DE-A- 2 043 848
- DE-A- 2 904 312
- DE-A- 3 440 562
- GB-A- 1 154 008
- US-A- 3 747 308
- PATENT ABSTRACTS OF JAPAN, Band 11, Nr. 193 (C-430)[2640], 20. Juni 1987,Seite 134 C 430; & JP-A-62 19 241 (MATSUSHITA ELECTRIC IND. CO., LTD) 28-01-1987

## Beschreibung

Die Erfindung betrifft ein Verfahren und eine Vorrichtung zur Entfernung von Fluor- und/oder Chlorwasserstoffen aus einem Abgasstrom, wobei die Entfernung durch Kontaktreaktion der Fluor- und/oder Chlorwasserstoffe mit Calciumverbindungen zu Calciumfluorid und/oder Calciumchlorid erfolgt.

Verfahren, bei denen eine Kontaktreaktion von Fluor- und/oder Chlorwasserstoff mit Calciumverbindungen zu Calciumfluorid und/oder Calciumchlorid erfolgt, sind bekannt und werden z.B. in wlb "wasser, luft und betrieb" 10/85, S. 37-39 oder in "Chemie-Technik", 15. Jahrgang (1986) Nr. 2, S. 30-34 beschrieben. Derartige Verfahren werden häufig zur Reinigung von Rauchgasen angewendet, wobei die Rauchgase entweder im Trockenverfahren oder im Naßverfahren entfluorisiert und/oder entchloriert werden.

Beim Trockenverfahren wird das Rauchgas durch eine Schüttung aus Kalksplitt geleitet, wobei sich das entstehende Calciumfluorid und Calciumchlorid an der Oberfläche der einzelnen Splittkörner anlagert. Nach Umwandlung der Oberfläche des Kalksplitts in Calciumfluorid und Calciumchlorid findet keine Reinigung mehr statt und die Kaltsplittschüttung muß erneuert werden. Das Trockenverfahren wird üblicherweise im Gegenstrom betrieben.

Beim Naßverfahren wird das Rauchgas durch einen Naßwäscher geleitet. Die Waschflüssigkeit besteht aus einer Suspension von Calciumverbindungen und Wasser. Der Fluor- und/oder Chlorwasserstoff verbindet sich mit den Calciumverbindungen zu Calciumfluorid und/oder Calciumchlorid in Form eines Schlamms, der durch verschiedene Verfahren aus der Waschflüssigkeit entfernt wird.

Die bekannten Verfahren weisen jedoch die folgenden Nachteile auf:
Es tritt ein hoher Druckverlust im Rauchgasstrom auf, so daß zusätzliche Ventilatoren zur Beförderung des Rauchgasstromes erforderlich sind, durch die die Betriebskosten erhöht werden. Insgesamt ist ein hoher apparativer Aufwand erforderlich, was sich insbesondere bei kleinen Rauchgasmengen nachteilig und kostenerhöhend auswirkt.

Ein weiterer Nachteil besteht darin, daß die bekannten Verfahren sehr empfindlich gegen Stäube im Rauchgasstrom sind. Ferner werden bei den bekannten Verfahren die Calciumverbindungen schlecht und in nicht genau definierbarer Weise ausgenutzt. Dies liegt insbesondere beim Trockenverfahren daran, daß die einzelnen Splittkörper teilweise aneinander haften und deshalb die gesamte reaktive Oberfläche nicht genau definiert ist.

Ferner entsteht bei dem bekannten Trockenverfahren ein hoher betrieblicher Aufwand durch den häufigen Schüttgutwechsel und beim Naßverfahren durch die regelmäßig erforderliche Reinigung des Wäschers.

Ein weiterer Nachteil der bekannten Verfahren liegt in dem hohen Aufwand, der für Messungen des Wirkungsgrades und damit der Fluorwasserstoff- und/oder Chlorwasserstoff-Emission erforderlich ist.

Aus der DE-A-20 43 848 ist ein Verfahren zur Entfernung von gasförmigen Halogenverbindungen aus Gasen bekannt, bei dem Chlorverbindungen und Wasserdampf enthaltende gasförmige und verdampfbare Kohlenwasserstoffe oder Synthesegase bei Temperaturen im Bereich von 100 bis 500°C über fest angeordnete Absorptionsmittel geleitet werden. Die Absorptionsmittel enthalten Erdalkalioxide, -hydroxide oder -carbonate, die mit Alkalihydroxiden und/oder Alkalicarbonaten gemischt sein können. Bei den Erdalkalimetallverbindungen handelt es sich beispielsweise um Calciumverbindungen.

Aus der US-A-4 363 644 ist ein Filter zum Reinigen von Auspuffgasen von Verbrennungskraftmaschinen bekannt, welches einen festen keramischen Träger aufweist, welcher zylindrisch ausgebildet ist und eine wabenförmige Struktur mit mehreren Durchlässen zum Durchfluß der zu reinigenden Gase aufweist. Diese Durchlässe sind mit einem porösen keramischen Filtermaterial gefüllt, welches mit den Wänden der wabenförmigen Struktur durch Sintern verbunden ist.

Aus der DE-A-37 05 793 ist ein Filterapparat zur Gasreinigung mit einem Staubfilter im Rohgasraum des Filtergehäuses bekannt, bei dem das Staubfilter aus Filterelementen aus einer offenporigen Schaumkeramik besteht. Die Filterelemente können die Form eines zylindrischen oder polygonförmigen Rohrkörpers aufweisen, der innenseitig durch radiale Wände in Kammern unterteilt ist. Der Filterapparat kann zur Rauchgasreinigung verwendet werden.

Aus JP-A-62-19241 ist ein Absorber für Stickstoffoxid und Schwefeloxid bekannt, bei dessen Herstellung Aktivkohle, Kaliumsulfat, Calciumhydroxid, Calciumsulfat, Kaliumcarbonat und Calciumcarbonat mit Wasser gemischt werden und die Mischung in eine gasdurchlässige Struktur eingetaucht wird, um die Oberfläche der Struktur mit der Mischung zu beschichten. Die Struktur kann beispielsweise aus wabenförmiger Keramik bestehen. Der Absorber gemäß JP-A-62-19241 besteht somit aus einem Keramik-Grundkörper, der mit einer Beschichtung aus der genannten Mischung als Absorptionsmittel beschichtet ist.

Aus WO-A-82/04406 ist ein Verfahren zur Beseitigung von Schadstoffen aus Abgasen bekannt, bei dem eine Calciumverbindung zusammen mit einem löslichen Bindemittel in Form einer Aufschlämmung auf an sich bekannte Füllkörper aufgebracht und anschließend getrocknet wird. Danach werden die Füllkörper mit der getrockneten Aufschlämmung der Calciumverbindung als lockere Packung in den Abgasstrom eingebracht. Somit besteht der Absorber gemäß WO-A-82/04406 aus einer Beschichtung auf einem als Träger dienenden Körper, wobei die beschichteten Füllkörper in lockerer Schüttung eingesetzt werden, was zu einem hohen Druckverlust führt und bei der Reinigung von staubhaltigen Abgasen zur Verstopfung führen kann.

Der Erfindung liegt somit die Aufgabe zugrunde, die vorstehenden Nachteile zu vermeiden und ein Verfahren und eine Vorrichtung zur Entfernung von Fluor- und/oder Chlorwasserstoff aus Abgasströmen bereitzustellen, mit denen insbesondere bestehende Anlagen nachgerüstet werden können und die ohne zusätzliche bewegliche Teile auskommen, und mit denen ein verlängerter Betriebszyklus auch bei der Reinigung von Gasen mit hoher Staubbelastung ermöglicht wird. Diese Aufgabe wird durch die Merkmale der Patentansprüche gelöst. Die Erfindung geht dabei von dem Grundgedanken aus, in ihren geometrischen Abmessungen genau definierte Kontaktflächen aus Calciumverbindungen bereitzustellen.

Erfindungsgemäß werden die beladenen Abgase durch mehrere Gasdurchgänge oder Gaskanäle mindestens eines in seinen geometrischen Abmessungen genau definierten, wabenförmigen Festkörpers oder Wabenkörpers geleitet, wobei zumindest die Oberfläche des Körpers aus Calciumverbindungen besteht. Die Kontaktreaktion zwischen dem Fluor- und Chlorwasserstoff aus dem Abgas und den Calciumverbindungen des Wabenkörpers findet an der Wand der Kanäle des Wabenkörpers statt, wodurch die Kontaktfläche genau bestimmbar ist.

Die geometrischen Abmessungen der einzelnen Gaskanäle, die Wandstärke der Stege zwischen den Kanälen, die Zahl der Kanäle pro Wabenkörper und die Länge jedes Wabenkörpers können je nach den Erfordernissen bestimmt und eingestellt werden. Erfindungsgemäß können die vorstehenden Größen abhängig von der Menge, der Geschwindigkeit, der Fluor- und Chlorwasserstoffbelastung und/oder der Staubbeladung des Abgases so gewählt werden, daß optimale Verhältnisse für die Abgasreinigung herrschen, insbesondere daß der Druckverlust im Abgasstrom sehr gering gehalten werden kann, und daß eine Beeinträchtigung der Kontaktflächen durch Staub vermieden wird. Erfindungsgemäß kann das Abgas ohne zusätzliche Ventilatoren rasch durch die Wabenkörper strömen.

Die Dicke der Stege zwischen den Kanälen wird so gewählt, daß die in den Stegen enthaltenen Calciumverbindungen voll zur Umwandlung des Fluor- und/oder Chlorwasserstoffes in Calciumfluorid und/oder Calciumchlorid genutzt werden können. Diese Kontaktreaktion läuft zunächst an der Oberfläche der Stege ab, es findet aber im Lauf der Zeit auch eine Diffusion innerhalb einer gewissen Schichtdicke statt.

Vorzugsweise werden die einzelnen Wabenkörper jweils zu Modulen zusammengefaßt. Die Wabenkörper oder die Module sind vorzugsweise von einem Gehäuse umschlossen, das so ausgeführt werden kann, daß ein schneller Wechsel der Wabenkörper ohne Betriebsunterbrechung durchgeführt werden kann. Die erfindungsgemäße Vorrichtung ist so ausgelegt, daß bei einer üblichen Volumenbelastung des Abgases von etwa 200 bis 10 000 m³/m³ x h der Wechselzyklus der Wabenkörper etwa ein Jahr beträgt.

Da bei der Auslegung der erfindungsgemäßen wabenförmigen Festkörper aus Calciumverbindungen deren chemische Zusammensetzung und genaue geometrische Abmessungen in Beziehung zur zu reinigenden Abgasmenge und deren Fluor- und/oder Chlorwasserstoffbelastung gebracht werden können, kann die Oberflächensättigung jedes Wabenkörpers in Abhängigkeit vom Abgasdurchsatz berechnet und definiert werden. Auf diese Weise ist sichergestellt, daß die vorgeschriebenen Emissionen eingehalten werden können, ohne daß eine aufwendige periodische Messung des Wirkungsgrades oder eine laufende Überwachung notwendig ist.

Das bedeutet, daß über eine relativ einfache Messung des Abgasdurchsatzes der Zeitpunkt zur notwendigen Auswechslung der Wabenkörper vorherbestimmt und die Fluor- und/oder Chlorwasserstoffemission überwacht werden kann.

Eine zusätzliche Sicherheit bei der Einhaltung der zulässigen Emissionswerte kann dadurch erreicht werden, daß die Sättigung der Kontaktflächen der Wabenkörper mit Calciumfluorid bzw. Caliumchlorid leicht durch Indikatoren nachgewiesen werden kann, die vorzugsweise in den Wabenkörpern angeordnet bzw. in diese eingearbeitet sind. Als Indikator kann beispielsweise Eisenrhodanid verwendet werden, das die Sättigung durch einen Farbumschlag anzeigt. Die Indikatoren werden vorzugsweise in der in Strömungsrichtung der Abgase hintersten Modullage der Wabenkörper angeordnet. Bei dem mit einer Schüttung aus Kalksplitt arbeitenden bekannten Trockenverfahren ist der Einsatz derartiger Indikatoren nicht so leicht möglich, da diese Verfahren nach dem Gegenstromprinzip arbeiten.

Die einzelnen Abgaskanäle der Wabenkörper können einen rechteckigen, vieleckigen, insbesondere sechseckigen, runden oder elliptischen Querschnitt aufweisen. Aus geometrischen und Stabilitätsgründen ist ein quadratischer Querschnitt besonders bevorzugt. Entsprechend weisen auch die Wabenkörper vorzugsweise einen quadratischen Querschnitt auf, der Querschnitt kann jedoch auch vieleckig, insbesondere sechseckig,oder rund sein.

Die einzelnen Kanäle der Wabenkörper weisen vorzugsweise eine Querschnittsfläche von etwa 4 mm² bis 64 mm² auf. Rechteckige Kanäle haben vorzugsweise eine Querschnittsfläche von 2 x 2 mm bis 8 x 8 mm, besonders bevorzugt etwa 4 x 4 mm. Jeder Wabenkörper kann beliebig viele einzelne Kanäle aufweisen, vorzugsweise etwa 50 bis 1000 Kanäle. Besonders bevorzugt weist ein einzelner Wabenkörper etwa 28 x 28 Kanäle auf.

Die Stegdicke ist besonders wichtig, da an den Stegen die Kontaktreaktion abläuft. Im gesättigten Zustand sind die Calciumverbindungen an der Oberfläche der Stege praktisch vollständig in Calciumfluorid und Calciumchlorid umgewandelt, während die Konzentration der Reaktionsprodukte im Innern der Stege etwa logarithmisch abnimmt. Optimale Ergebnisse werden erzielt, wenn die Stege etwa 0,5 mm bis 2 mm dick sind, besonders bevorzugt etwa 0,7 mm bis 1,4 mm.

Vorzugsweise beträgt die Strömungsfläche, d.h. die Fläche der Gaskanäle, etwa 40 bis 80 %, besonders bevorzugt etwa 50 bis 75 % der gesamten Querschnittsfläche, während die Restfläche von den Stegen eingenommen wird.

Die Länge der einzelnen Wabenkörper beträgt aus Gründen der Stabilität und des Wirkungsgrades vorzugsweise etwa 150 bis 600 mm, besonders bevorzugt etwa 300 mm.

Die vorstehenden Abmessungen sind für übliche Abgasbelastungen besonders geeignet, können jedoch in Abhängigkeit von der Abgasmenge und der Schadstoffbeladung der Gase entsprechend variiert werden.

Als Calciumverbindungen werden vorzugsweise Calciumoxid, Calciumhydroxid, Calciumcarbonat oder Gemische hieraus verwendet. Mit diesen Verbindungen läuft die Kontaktreaktion besonders günstig ab.

Die mit wabenförmigen Festkörpern aus Calciumverbindungen bestückte erfindungsgemäße Abgasreinigungsvorrichtung ist insbesondere für kleine Anlagen mit relativ geringen Abgasmengen von Bedeutung, bei denen sich wegen des hohen apparativen Aufwandes und der hohen Betriebskosten der Einsatz der bekannten Verfahren und Vorrichtungen aus wirtschaftlichen Gründen nicht vertreten läßt. Die erfindungsgemäße Abgasreinigungsvorrichtung ist insbesondere für keramische Handwerksbetriebe geeignet, in denen periodisch betriebene Öfen im Einsatz sind, deren Rauchgase gereinigt werden müssen. Da bei diesen Öfen die Rauchgasmenge und deren Fluor- und/oder Chlorwasserstoffbeladung im allgemeinen bekannt ist, ist erfindungsgemäß eine Überwachung der Abgasreinigungsvorrichtung auf ordnungsgemäße Funktion sehr leicht ohne Durchführung von Messungen lediglich aufgrund der Anzahl der Ofenbrände möglich.

Die Erfindung wird nachstehend anhand der Zeichnung näher erläutert. Es zeigen:
Fig. 1 einen Schnitt durch eine erfindungsgemäße Vorrichtung, bei der die Wabenkörper in ein Gehäuse eingebaut sind, und
Fig. 2 eine schematische perspektivische Ansicht eines einzelnen Wabenkörpers.

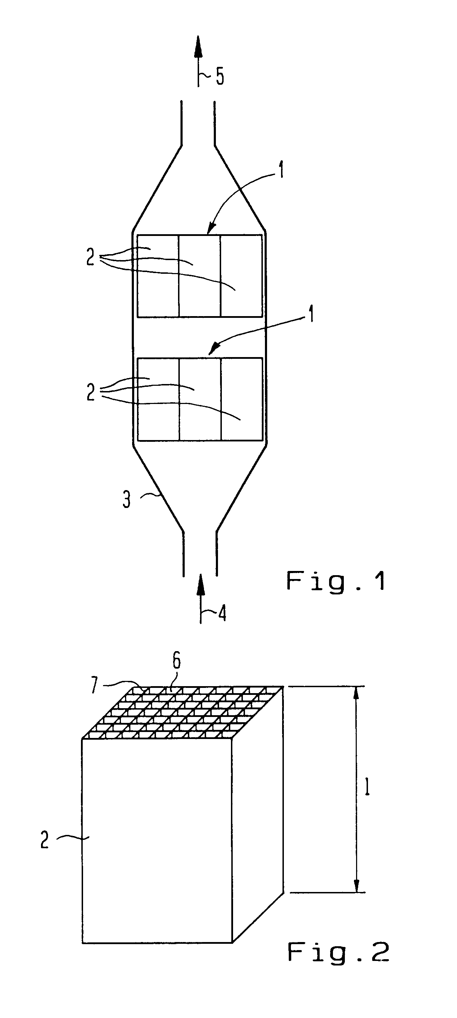

Gemäß Fig. 1 sind mehrere Wabenkörper 2 in Form von Modulen zu Bündeln 1 zusammengesetzt. Jedes Bündel 1 umfaßt 3 x 3, d.h. neun Wabenkörper 2. In Strömungsrichtung des Abgases sind zwei Bündel 1 von Wabenköpern 2 hintereinander angeordnet und in einem Gehäuse 3 integriert. Das Gehäuse 3 weist eine Abgaszuleitungsöffnung 4 und eine Abgasableitungsöffnung 5 auf, und der Querschnitt des Gehäuses 3 ist gegenüber der Abgasleitung vergrößert. Das gesamte Gehäuse 3, oder die einzelnen Wabenkörperbündel 1 können bei Eintritt der Sättigung rasch und ohne Betriebsunterbrechung ausgetauscht werden. Gegebenenfalls können auch mehrere Gehäuse 3 parallel so geschaltet werden, daß sie wahlweise von dem zu reinigenden Abgas durchströmt werden.

In der perspektivischen Ansicht des Wabenkörpers 2 gemäß Fig. 2 sind die Abgaskanäle 6 und die Stege 7 schematisch dargestellt. Die Anzahl und die Querschnitte der Kanäle 6, die Dicke der Stege 7 und die Länge 1 der einzelnen Wabenkörper 2 sowie die Anzahl der Wabenkörper 2 in jedem Wabenkörperbündel 1 und die Zahl der Bündel 1 werden in Abhängigkeit von der zu reinigenden Abgasmenge und der Beladung des Abgases festgelegt. Durch die Abmessungen und die Anzahl der Wabenkörper 2 läßt sich die gesamte wirksame Kontaktfläche und das Volumen der Abgasreinigungsanlage bestimmen.

## Patentansprüche

1. Vorrichtung zur Entfernung von Fluor- und/oder Chlorwasserstoff aus Abgasströmen durch Kontaktreaktion mit Calciumverbindungen zu Calciumfluorid und/oder Calciumchlorid, **gekennzeichnet durch** mindestens einen wabenförmigen Festkörper (2) aus Calciumverbindungen, durch den die fluor- und/oder chlorwasserstoffbeladenen Abgasströme geleitet werden.

2. Vorrichtung nach Anspruch 1, dadurch gekennzeichnet, daß mehrere wabenförmige Festkörper (2) zu Bündeln (1) zusammengefaßt sind.

3. Vorrichtung nach Anspruch 1 oder 2, dadurch gekennzeichnet, daß mehrere wabenförmige Festkörper (2) in Strömungsrichtung des Abgases hintereinander angeordnet sind.

4. Vorrichtung nach einem der Ansprüche 1 bis 3, dadurch gekennzeichnet, daß jeweils mehrere der wabenförmigen Festkörper (2) von einem Gehäuse (3) umschlossen sind.

5. Vorrichtung nach einem der Ansprüche 1 bis 4, dadurch gekennzeichnet, daß jeder wabenförmige Festkörper etwa 50 bis 1000 Kanäle (6) aufweist, durch die die Abgasströme geleitet werden.

6. Vorrichtung nach einem der Ansprüche 1 bis 5, dadurch gekennzeichnet, daß jeder wabenförmige Festkörper (2) einen quadratischen, sechseckigen oder runden Querschnitt aufweist.

7. Vorrichtung nach Anspruch 5 oder 6, dadurch gekennzeichnet, daß jeder Kanal (6) einen quadratischen, sechseckigen oder runden Querschnitt aufweist.

8. Vorrichtung nach einem der Ansprüche 5 bis 7, dadurch gekennzeichnet, daß jeder Kanal (6) eine Querschnittsfläche von 2 x 2 mm bis 8 x 8 mm, vorzugsweise etwa 4 x 4 mm, aufweist.

9. Vorrichtung nach einem der Ansprüche 5 bis 8, dadurch gekennzeichnet, daß zwischen den Kanälen (6) Stege (7) mit einer Stärke von etwa 0,5 mm bis 2 mm, vorzugsweise etwa 0,7 mm bis 1,4 mm, angeordnet sind.

10. Vorrichtung nach einem der Ansprüche 1 bis 9, dadurch gekennzeichnet, daß jeder wabenförmige Festkörper (2) etwa 150 mm bis 600 mm lang ist.

11. Vorrichtung nach einem der Ansprüche 1 bis 10, dadurch gekennzeichnet, daß als Calciumverbindungen Calciumoxid, Calciumhydroxid und/oder Calciumcarbonat verwendet werden.

12. Verfahren zur Entfernung von Fluor- und/oder Chlorwasserstoff aus Abgasströmen durch Kontaktreaktion mit Calciumverbindungen zu Calciumfluorid und/oder Calciumchlorid, dadurch gekennzeichnet, daß die Abgasströme durch mindestens einen wabenförmigen Festkörper aus Calciumverbindungen geleitet werden, dessen Kanalwände die Kontaktflächen ausbilden, an denen sich Calciumfluorid und/oder Calciumchlorid bildet.

13. Verfahren nach Anspruch 12, dadurch gekennzeichnet, daß die chemische Zusammensetzung und/oder die geometrischen Abmessungen jedes wabenförmigen Festkörpers in Abhängigkeit von der Abgasmenge und der Chlor- und/oder Fluorbeladung des Abgases eingestellt werden.

14. Verfahren nach Anspruch 12 oder 13, dadurch gekennzeichnet, daß die Sättigung der Kontaktflächen der wabenförmigen Festkörper mit Calciumfluorid und/oder Calciumchlorid durch Indikatoren in den Wabenkörpern nachgewiesen wird.

15. Verwendung der Vorrichtung nach einem der Ansprüche 1 bis 11 zur Reinigung der Rauchgase von keramischen Brennöfen.

## Claims

1. An apparatus for removing hydrogen fluoride or hydrogen chloride from exhaust gas streams by contact reaction with calcium compounds to form calcium fluoride and/or calcium chloride, characterized in that said apparatus has at least one honeycomb structure which contains the calcium compounds and through which the exhaust gas streams bearing the hydrogen fluoride and/or hydrogen chloride are passed.

2. The apparatus according to claim 1, characterized in that a plurality of honeycomb structures (2) are combined into bundles (1).

3. The apparatus according to claim 1 or 2, characterized in that a plurality of honeycomb structures (2) are arranged in series in the flow direction of the exhaust gas.

4. The apparatus according to any one of claims 1 to 3, characterized in that a plurality of the honeycomb structures (2) are enclosed in a casing (3).

5. The apparatus according to any one of claims 1 to 4, characterized in that each honeycomb structure has about 50 to 1000 channels (6) through which the exhaust gas streams are led.

6. The apparatus according to any one of claims 1 to 5, characterized in that each honeycomb structure (2) has a square, hexagonal or circular cross-section.

7. The apparatus according to claim 5 or 6, characterized in that each channel (6) has a square, hexagonal or circular cross-section.

8. The apparatus according to any one of claims 5 to 7, characterized in that each channel (6) has a cross-section of 2 x 2 mm to 8 x 8 mm, preferably about 4 x 4 mm.

9. The apparatus according to any one of claims 5 to 8, characterized in that between the channels (6) there are arranged partitions (7) which are about 0.5 mm to 2 mm, preferably about 0.7 mm to 1.4 mm thick.

10. The apparatus according to any one of claims 1 to 9, characterized in that the length of each honeycomb structure (2) is about 150 mm to 600 mm.

11. The apparatus according to any one of claims 1 to 10, characterized in that the calcium compounds are selected from the group consisting of calcium oxide, calcium hydroxide and/or calcium carbonate.

12. A process for removing hydrogen fluoride and/or hydrogen chloride from exhaust gas streams by contact reaction with calcium compounds to form calcium fluoride and/or calcium chloride, characterized in that the exhaust gas streams are passed through at least one honeycomb structure consisting of the calcium compounds, the passage walls of the honeycomb structure providing the contact surfaces on which the calcium fluoride and/or calcium chloride form.

13. The process according to claim 12, characterized in that the chemical composition and/or the geometrical dimensions of each honeycomb structure are adjusted depending on the amount of the exhaust gas and the chlorine and/or fluorine load borne by the exhaust gas.

14. The process according to claim 12 or 13, characterized in that the calcium fluoride and/or the calcium chloride saturation of the contact surfaces of the honeycomb structures is detected by indicators arranged in the exhaust gas stream.

15. The use of the apparatus according to any one of claims 1 to 11 for purifying exhaust gases emitted by furnaces for baking ceramics.

## Revendications

1. Dispositif pour éliminer le fluorure et/ou le chlorure d'hydrogène à partir des courants de gaz d'échappement par réaction de contact avec des composés de calcium en fluorure de calcium et/ou chlorure de calcium, caractérisé par au moins un corps solide (2) en nid d'abeille réalisé à partir de composés de calcium, à travers lequel on dirige les courants de gaz d'échappement chargés de fluorure et de chlorure d'hydrogène.

2. Dispositif selon la revendication 1, caractérisé en ce que plusieurs corps solides en nid d'abeille (2) sont assemblés en faisceau (1).

3. Dispositif selon la revendication 1 ou 2, caractérisé en ce que plusieurs corps solides (2) en nid d'abeille sont agencés successivement dans la direction d'écoulement des gaz d'échappement.

4. Dispositif selon l'une des revendications 1 à 3, caractérisé en ce que des pluralités de corps solides en nid d'abeille (2) sont enfermées dans un logement (3).

5. Dispositif selon l'une des revendications 1 à 4, caractérisé en ce que chaque corps solide en nid d'abeille présente environ 50 à 1000 canaux (6) à travers lesquels sont dirigés les courants de gaz d'échappement.

6. Dispositif selon l'une des revendications 1 à 5, caractérisé en ce que chaque corps solide en nid d'abeille (2) présente une section transversale carrée, hexagonale ou ronde.

7. Dispositif selon la revendication 5 ou 6, caractérisé en ce que chaque canal (6) présente une section transversale carrée, hexagonale ou ronde.

8. Dispositif selon l'une des revendications 5 à 7, caractérisé en ce que chaque canal (6) présente une surface de section transversale de 2 x 2 mm jusqu'à 8 x 8 mm, de préférence d'environ 4 x 4 mm.

9. Dispositif selon l'une des revendications 5 à 8, caractérisé en ce qu'entre les canaux (6) sont agencées des entretoises (7) d'une épaisseur d'environ 0,5 mm jusqu'à 2 mm, de préférence d'environ 0,7 mm jusqu'à 1,4 mm.

10. Dispositif selon l'une des revendications 1 à 9, caractérisé en ce que chaque corps solide en nid d'abeille (2) est d'une longueur d'environ 150 mm jusqu'à 600 mm.

11. Dispositif selon l'une des revendications 1 à 10, caractérisé en ce qu'en tant que composé de calcium on utilise de l'oxyde de calcium, de l'hydroxyde de calcium et/ou du carbonate de calcium.

12. Procédé pour l'élimination de fluorure et/ou de chlorure d'hydrogène à partir de courant des gaz d'échappement par réaction de contact avec des composés de calcium en fluorure de calcium et/ou chlorure de calcium, caractérisé en ce que les courants des gaz d'échappement sont guidés par au moins un corps solide réalisé à partir de composé de calcium en nid d'abeille dont les parois de canaux forment les surfaces de contact sur lesquelles se forment le fluorure de calcium et/ou le chlorure de calcium.

13. Procédé selon la revendication 12, caractérisé en ce que la composition chimique et/ou les dimensions géométriques de chaque corps solide en nid d'abeille est réglée en fonction de la quantité des gaz d'échappement et de la charge de chlore et/ou de fluor des gaz d'échappement.

14. Procédé selon la revendication 12 ou 13, caractérisé en ce que la saturation en fluorure de calcium et/ou en chlorure de calcium des surfaces de contact des corps solides en nid d'abeille est détectée par des indicateurs dans les corps en nid d'abeille.

15. Utilisation du dispositif selon l'une des revendications 1 à 11 pour la purification des gaz de fumée des fours de combustion en céramique.
